# DEMANDE DE BREVET EUROPEEN

(11) **EP 1 584 803 A1**
(43) Date de publication de la demande: **12.10.2005**
(21) Numéro de dépôt: 05102710.0
(22) Date de dépôt: 06.04.2005
(51) Int. Cl.: F01N 3/04, F01N 7/00

(54) **Procede et systeme d'echappement et de refroidissemnet des gaz de machines thermodynamiques sur les navires**

(30) Priorité: 07.04.2004 FR 0450700
(71) Demandeur: TECHNICATOME, Société Technique pour l'Energie Atomique, 91190 Gif sur Yvette (FR)
(72) Inventeur: Chaix, Jean-Edmond, 04860 Pierrevert (FR)
(74) Mandataire: Poulin, Gérard

(57) **Abrégé**

Le système selon l'invention permet d'éviter des effets de turbulences dus aux échappements par cheminée des gaz des machines de propulsion sur les porte-avions (1).

Il consiste à créer une circulation interne d'eau au moyen d'une écope (3) d'une pompe de circulation (4), d'une chambre d'admission (6) dans laquelle débouchent les gaz d'échappement des machines thermodynamiques du navire. Des injecteurs d'eau sont placés dans cette chambre d'admission (6). Le mélange obtenu est évacué par une canalisation (7) et une divergent (8) débouchant à l'extérieur du navire, à l'arrière de celui-ci, juste au-dessus de la ligne de flottaison.

Application aux portes-avions.

## Description

### Domaine de l'invention

L'invention concerne les navires propulsés par des machines thermodynamiques, telles que, entre autres, des turbines à gaz et des moteurs à combustion interne dégageant des gaz à haute température. Une application particulièrement avantageuse est prévue pour les porte-avions.

### Art antérieur et problème posé

Sur les navires de moyen et fort tonnages, les gaz d'échappement des machines de propulsion thermodynamique, telles que les turbines à gaz et les moteurs à combustion interne, sont évacués au moyen de cheminées de grandes dimensions surmontant l'ensemble de la structure supérieure du navire. Les gaz ainsi évacués le sont, au niveau de ces cheminées, à plusieurs centaines de degrés C, environ 500°C. Ceci présente des inconvénients communs à toutes sortes de navires, tels que la création d'un ou de plusieurs points chauds, des risques d'incendies, une perte de place dans la partie supérieure de la structure du navire. Pour les navires de guerre, s'ajoute l'inconvénient dû à la perte de furtivité liée à l'émission d'ondes infrarouges dues à la température. Enfin, pour les porte-avions, l'évacuation par ces cheminées provoque la génération de courants d'air chaud ascensionnels engendrant de dangereuses turbulences pour les avions en phase d'appontage et éventuellement de décollage.

Le but de l'invention est de remédier à ces inconvénients en proposant une autre manière d'évacuer les gaz d'échappement de telles machines thermodynamiques sur les navires.

### Résumé de l'invention

A cet effet, un premier objet principal de l'invention est un procédé d'échappement et de refroidissement des gaz d'échappement de machines thermodynamiques prévu pour la propulsion d'un navire, le procédé consistant à refroidir les gaz d'échappement par mélange dans de l'eau sur laquelle évolue le navire.

La réalisation principale prévoit de créer une circulation naturelle de l'eau à l'intérieur du navire, de l'avant vers l'arrière, pour procéder au refroidissement par mélange des gaz dans l'eau qui est injectée dans les gaz, l'injection se faisant dans une chambre d'admission au moyen de plusieurs injecteurs pour homogénéiser le mélange, ce mélange étant avantageusement effectuée au moyen d'un divergent à la sortie de la canalisation de mélange, dans le but de faire baisser la pression et donc de récupérer de l'énergie, et l'évacuation du mélange ainsi obtenu se faisant juste au-dessus de la ligne de flottaison.

Ce procédé peut être amélioré en utilisant une injection forcée de l'eau, par exemple au moyen d'une pompe de circulation.

Dans le but d'améliorer ce mélange, il est avantageux de prolonger celui-ci sur une certaine distance avant l'évacuation du mélange.

Il est également prévu de pouvoir extraire une partie de la chaleur des gaz d'échappement, à la sortie des machines thermodynamiques, au moyen d'un échangeur de chaleur, dans le but de fournir de l'énergie de fonctionnement auxiliaire au navire.

Un deuxième objet principal de l'invention est un système d'échappement et de refroidissement des gaz d'échappement des machines thermodynamiques de propulsion d'un navire, comprenant principalement :
- un collecteur d'échappement des gaz d'échappement ;
- une écope d'entrée de l'eau dans la partie inférieure du navire ;
- une canalisation d'admission pour l'acheminement de l'eau dans une chambre d'admission des gaz ;
- au moins un injecteur d'eau à la sortie de la canalisation d'admission, dans la chambre d'admission ; et
- une canalisation de mélange débouchant à l'extérieur du navire, en arrière par rapport à l'écope d'entrée.

La réalisation principale prévoit l'utilisation d'une pompe de circulation dans la canalisation d'admission de l'eau pour forcer l'admission de l'eau.

Il est avantageux de disposer un convergent à la sortie de la chambre d'admission, au niveau du au moins un injecteur.

Selon l'invention, plusieurs injecteurs d'eau sont placés dans la chambre d'admission, la canalisation de mélange a une longueur égale à environ six fois son diamètre à la sortie de la chambre d'admission, on utilise un divergent à la sortie de la canalisation de mélange dans le but de faire baisser la pression du mélange à ce niveau, et la sortie du mélange se fait en débouchant à l'arrière du navire, au-dessous de la ligne de flottaison, de manière à ne pas provoquer de mouvements ascensionnels d'air.

### Liste des figures

L'invention et ses caractéristiques techniques seront mieux comprises à la lecture de la description détaillée d'une réalisation de l'invention, accompagnée de trois figures représentant respectivement :
- figure 1, un schéma relatif au procédé et au système selon l'invention ;
- figure 2, schématiquement, un navire sur lequel est installé le système selon l'invention ; et
- figure 3, schématiquement, l'arrière du navire sur lequel est installé le système selon l'invention.

### Description détaillée d'une réalisation de l'invention

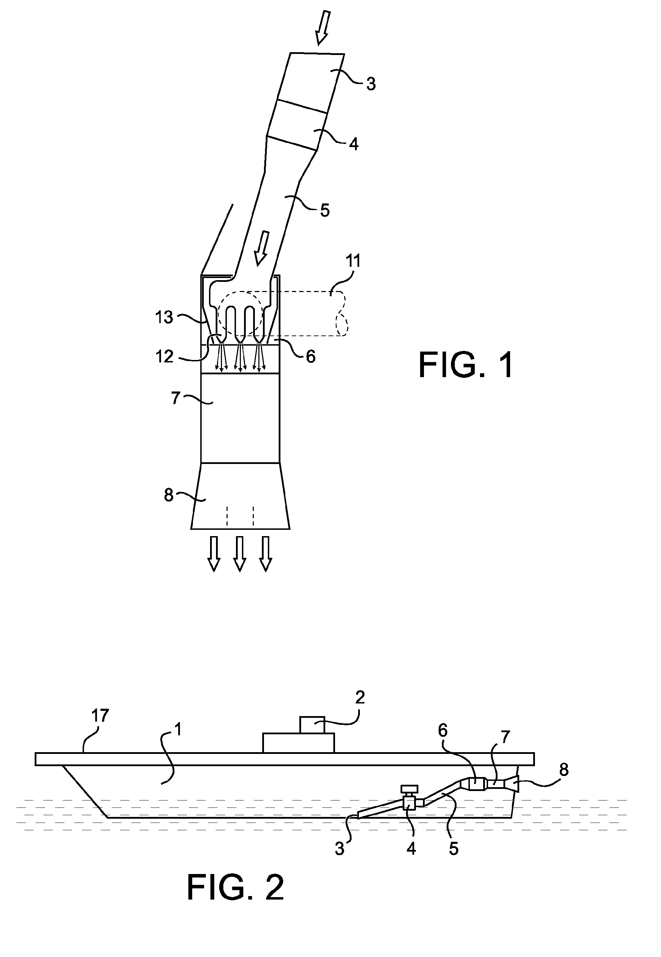

En référence à la figure 1, le système selon l'invention comprend une écope 3 dont l'ouverture est tournée vers l'avant du navire, c'est-à-dire, lorsque celui-ci avance, de façon à ce que l'eau rentre dans celle-ci. L'utilisation d'une telle écope 3 permet au circuit d'eau de capter avantageusement l'eau en bénéficiant de l'effet de sillage du navire à grande vitesse. Elle est prolongée d'une canalisation d'admission d'eau 5 interne au navire. Sur cette dernière ou avant celle-ci est placée une pompe de circulation 4 pour renforcer l'injection de l'eau dans la canalisation d'admission d'eau 5 qui fait office de trompe.

D'autre part, les gaz d'échappement des machines thermodynamiques de propulsion du navire, à savoir des moteurs diesels ou des turbines à gaz sont collectés dans un collecteur des gaz d'échappement 11. Ce dernier aboutit dans une chambre d'admission 6, dans laquelle sont également installés des injecteurs d'eau 12 auxquels aboutit la canalisation d'admission d'eau 5. La chambre d'admission 6 est avantageusement équipée d'un convergent 13 permettant d'accélérer les gaz d'échappement. Ce convergent 13 se termine dans un plan radial de la chambre d'admission 6 dans lequel débouchent les injecteurs d'eau 12.

La vitesse de l'eau dans la canalisation interne d'admission d'eau 5 permet de produire une dépression dans la chambre d'admission 6, qui favorise l'échappement des gaz d'échappement des machines.

A la sortie de cette chambre d'admission 6 se trouve une canalisation interne de mélange 7 dans lequel le mélange double phase des gaz d'échappement et de l'eau captée s'effectue sur une certaine longueur. En effet, dans ce but, cette canalisation de mélange 7 a une longueur environ six fois plus importante que son diamètre. Dans le but de diminuer la puissance dissipée par un tel procédé, au moyen de ce système, un divergent 8 est placé en sortie de la canalisation de mélange 7 pour ralentir le mélange double phase et récupérer un maximum de pression. Pendant ce ralentissement, les gaz d'échappement dont la température à la sortie des machines peut atteindre 500°C, sont refroidis par contact jusqu'à une température avoisinant celle de l'eau captée. Il est ainsi envisagé, de capter de l'eau à 15° et de rejeter un mélange double phase à 25°.

La figure 2 montre schématiquement un navire de fort tonnage, à savoir un porte-avions 1 surmonté de sa structure supérieure 2, sans cheminée. Le système selon l'invention est placé dans la partie inférieure du porte-avions 1, à l'arrière de celui-ci. L'écope 3 est immergée au niveau de la partie inférieure de la coque, la pompe de circulation 4 est placée à l'intérieur du porte-avions. La partie terminale du système, constituée de la chambre d'admission 6, de la canalisation de mélange 7 et du divergent 8 peut être placée à l'extérieur de la coque du navire. On constate que le divergent 8 est placé juste au-dessus de la surface de l'eau, en dessous du niveau du pont 17 du porte-avions 1.

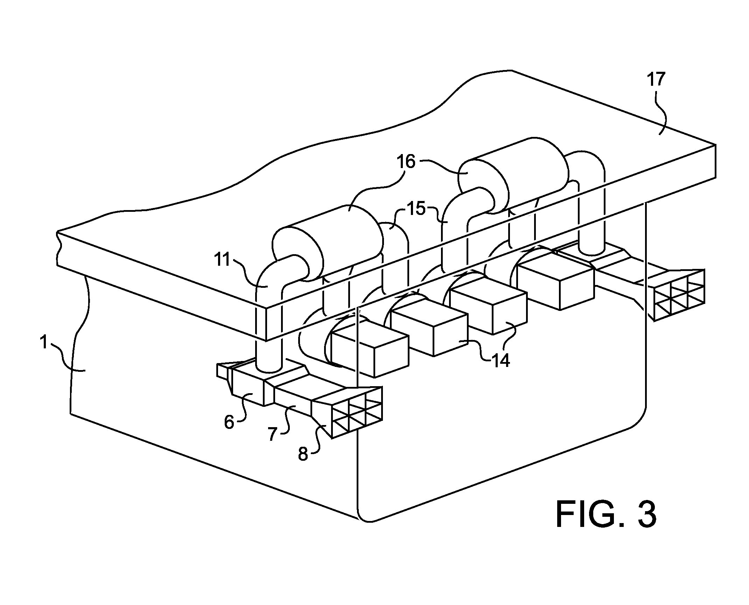

En référence à la figure 3, le système selon l'invention est implanté dans la partie arrière du porte-avions 1, en dessous du pont 13 de celui-ci. Sur cette figure sont schématisées quatre machines thermodynamiques 14, par exemple des moteurs diesels dont les gaz d'échappement sont collectés par des tubulures d'échappement 15. Chacune d'elles débouche dans un échangeur de chaleur 16 du type haute température, qui permet de capter une partie de l'énergie thermique issue de ces gaz d'échappement, dans le but de faire fonctionner des installations machines ou dispositifs du porte-avions 1. On pense en particulier aux catapultes de propulsion des avions. En effet, il est possible d'extraire 10 à 20 % de l'énergie de ces gaz pour alimenter les catapultes en vapeur. Les gaz ainsi refroidis partiellement, mais étant encore à une température de plusieurs centaines de degrés Celsius, sont acheminés par des collecteurs d'échappement 11 débouchant chacun dans une chambre d'admission 6.

On note qu'un système selon l'invention a été installé sur chaque bord du porte-avions 1. La canalisation de mélange 7 et le divergent 8 étant placés à l'extérieur de la coque du navire. Ceci n'est qu'une réalisation possible de l'invention, le procédé pouvant être adapté à la puissance de chacun des navires sur lequel il doit être utilisé, notamment en adaptant le nombre de système au nombre de machines.

On conçoit que, avec le procédé selon l'invention, les effets de turbulences dus aux échappements de cheminées sur les porte-avions traditionnels soient supprimés. Ceci présente un énorme avantage pour les pilotes devant apponter sur le porte-avions. De plus, la signature infrarouge du navire est fortement diminuée.

## Revendications

1. Procédé d'échappement et de refroidissement des gaz d'échappement de la ou des machines thermodynamiques (14) d'un navire, consistant à refroidir les gaz d'échappement par mélange dans l'eau sur laquelle se trouve le navire, **caractérisé en ce que** l'injection de l'eau se fait dans une chambre d'admission (6) au moyen de plusieurs injecteurs d'eau (12), et **en ce qu'**il consiste à :
- récupérer de l'énergie à la sortie du système au moyen d'un divergent (8),
- mélanger les gaz d'échappement et l'eau à la sortie de la chambre d'admission (6) dans une canalisation de mélange (7) sur une certaine longueur ; et
- évacuer le mélange obtenu juste au-dessus de la ligne de flottaison du navire (1).

2. Procédé selon la revendication 1, **caractérisé en ce qu'**il consiste à créer une circulation naturelle de l'eau à l'intérieur du navire, de l'avant vers l'arrière pour procéder au refroidissement par mélange des gaz d'échappement dans lequel l'eau est injectée.

3. Procédé selon la revendication 2, **caractérisé en ce que** l'injection de l'eau est forcée par une pompe de circulation (4).

4. Système d'échappement et de refroidissement des gaz d'échappement de la ou des machines thermodynamiques (14) d'un navire (1) comprenant :
- un collecteur d'échappement des gaz (11) des machines thermodynamiques (14) de propulsion du navire ;
- une écope (3) pour faire entrer l'eau, placée dans la partie inférieure du navire (1) ;
- une canalisation d'admission d'eau (5) à la sortie de écope (3) ;
- une chambre d'admission (6) des gaz d'échappement, placés à la fin de la canalisation d'admission d'eau (5) ;
- une canalisation de mélange (7) placée à la sortie de la chambre d'admission (6) et débouchant en arrière du navire (1) par rapport à écope (3),
**caractérisé en ce qu'**il comprend :
- un divergent (8), placé à la sortie de la canalisation de mélange (7),
- plusieurs injecteurs d'eau (12) placés dans la chambre d'admission, **en ce que** la canalisation de mélange (7) a une longueur égale à environ six fois son diamètre, et
**en ce que** la sortie du système débouche à l'arrière du navire (1), juste au-dessus de la ligne de flottaison du navire (1).

5. Système selon la revendication 4, **caractérisé en ce qu'**il comprend une pompe de circulation (4) placée à l'entrée de la canalisation d'admission (5).

6. Système selon la revendication 4, **caractérisé en ce qu'**il comprend un convergent (13) dans la chambre d'admission (6) au niveau du au moins un injecteur d'eau (12).
